(19) Europäisches Patentamt
European Patent Office
Office européen des brevets

(11) **EP 2 215 850 B1**

(12) # EUROPÄISCHE PATENTSCHRIFT

(45) Veröffentlichungstag und Bekanntmachung des Hinweises auf die Patenterteilung:
**29.05.2019  Patentblatt 2019/22**

(21) Anmeldenummer: **08848944.8**

(22) Anmeldetag: **14.11.2008**

(51) Int Cl.:
*H04N 13/30* (2018.01)          *G02B 27/22* (2018.01)
*H04N 13/376* (2018.01)        *H04N 13/31* (2018.01)
*H04N 13/315* (2018.01)        *H04N 13/373* (2018.01)
*H04N 13/371* (2018.01)

(86) Internationale Anmeldenummer:
**PCT/EP2008/009828**

(87) Internationale Veröffentlichungsnummer:
**WO 2009/062752 (22.05.2009 Gazette 2009/21)**

(54) **VERFAHREN UND VORRICHTUNG ZUM AUTOSTEREOSKOPISCHEN DARSTELLEN VON BILDINFORMATIONEN**

METHOD AND DEVICE FOR THE AUTOSTEREOSCOPIC DISPLAY OF IMAGE DATA

PROCÉDÉ ET DISPOSITIF DE REPRÉSENTATION AUTOSTÉRÉOSCOPIQUE D'INFORMATIONS D'IMAGE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.11.2007   DE 102007055026**

(43) Veröffentlichungstag der Anmeldung:
**11.08.2010   Patentblatt 2010/32**

(73) Patentinhaber: **Fraunhofer-Gesellschaft zur Förderung der angewandten Forschung e.V.
80686 München (DE)**

(72) Erfinder:
• **DE LA BARRÈ, René
09648 Mittweida (DE)**

• **PASTOOR, Siegmund
10823 Berlin (DE)**
• **RÖDER, Hans
14057 Berlin (DE)**

(74) Vertreter: **Pfenning, Meinig & Partner mbB
Patent- und Rechtsanwälte
Joachimsthaler Straße 10-12
10719 Berlin (DE)**

(56) Entgegenhaltungen:
EP-A- 0 829 743          WO-A-01/18589
WO-A-98/27451          WO-A-2008/003373
DE-A1- 19 822 342      US-A- 5 822 117

**Beschreibung**

Die Erfindung betrifft ein Verfahren zum autostereoskopischen Darstellen von Bildinformationen auf einem Matrixbildschirm nach dem Oberbegriff des Hauptanspruchs sowie eine entsprechende Vorrichtung zum autostereoskopischen Darstellen von Bildinformationen nach dem Oberbegriff des Nebenanspruchs.

Bei einem gattungsgemäßen Verfahren wird auf dem Matrixbildschirm eine Vielzahl von Bildpunkten durch jeweils eine Subpixelgruppe mit einer Mehrzahl von in ihrer Intensität veränderbaren, in Zeilen und Spalten angeordneten Subpixeln gebildet, wobei zwei stereoskopische Halbbilder auf jeweils einer von zwei Untergruppen der Bildpunkte abgebildet werden und wobei von den zwei Untergruppen von Bildpunkten ausgehendes Licht durch ein Barrierenraster so in zwei benachbarte Betrachtungszonen geleitet wird, dass das von den Bildpunkten einer ersten der beiden Untergruppen ausgehende Licht in eine linke Betrachtungszone für ein linkes Auge und das von den Bildpunkten einer zweiten der beiden Untergruppen ausgehende Licht in eine rechte Betrachtungszone für ein rechtes Auge eines Betrachters fällt. Dabei wird ferner eine Änderung einer Kopfposition des Betrachters detektiert und eine Ansteuerung der Subpixel an die Änderung der Kopfposition angepasst. Dadurch soll erreicht werden, dass ein stereoskopisches Sehen der Bildinformationen, für das jedes der zwei Halbbilder von genau einem der beiden Augen gesehen werden muss, bei verschiedenen Kopfpositionen möglich ist und auch bei einer Kopfbewegung erhalten bleibt. Ein entsprechender Stand der Technik ist in der Druckschrift WO 98/27451 A1 gezeigt. Das dort beschriebene Verfahren eignet sich jedoch nur für ein Nachführen einer seitlichen Kopfbewegung des Betrachters.

Der vorliegenden Erfindung liegt also die Aufgabe zugrunde, ein Verfahren zum autostereoskopischen Darstellen von Bildinformationen vorzuschlagen, mit dem eine Anpassung innerhalb eines größeren Bewegungsspielraums des Betrachters möglich wird, wobei diese Anpassung darüber hinaus ohne für den Betrachter wahrnehmbare Sprünge erfolgen soll. Der Erfindung liegt ferner die Aufgabe zugrunde, eine entsprechende Vorrichtung zum autostereoskopischen Darstellen von Bildinformationen zu entwickeln, die eine flexiblere Anpassung an eine sich ändernde Kopfposition des Betrachters erlaubt.

Diese Aufgabe wird erfindungsgemäß gelöst durch ein Verfahren mit den kennzeichnenden Merkmalen des Hauptanspruchs in Verbindung mit den Merkmalen des Oberbegriffs des Hauptanspruchs sowie durch eine Vorrichtung mit den Merkmalen des Nebenanspruchs. Vorteilhafte Ausgestaltungen und Weiterentwicklungen der Erfindung ergeben sich mit den Merkmalen der Unteransprüche.

Mit der Erfindung wird eine flexible Anpassung der Bilddarstellung auch an eine Änderung einer Betrachtungsentfernung zwischen Kopfposition des Betrachters und Matrixbildschirm dadurch möglich, dass die Subpixel innerhalb jedes der Bildpunkte mit einer zusätzlich zu den Bildinformationen zeilenweise subpixelabhängig gewichteten Intensität angesteuert werden derart, dass ein Intensitätsschwerpunkt innerhalb des jeweiligen Bildpunkts und damit ein Schwerpunkt einer seitlichen Intensitätsverteilung des von diesem Bildpunkt ausgehenden Lichts in der entsprechenden Betrachtungszone seitlich verschiebbar ist, wobei die Intensitätsschwerpunkte innerhalb der Bildpunkte bei einer Änderung der Betrachtungsentfernung durch ein Anpassen der Gewichtung der Intensitäten so verschoben werden, dass ein seitlicher Abstand zwischen dem Schwerpunkt der Intensitätsverteilungen in der linken Betrachtungszone und dem Schwerpunkt der Intensitätsverteilungen in der rechten Betrachtungszone in einer sich mit der Kopfposition verändernden Betrachtungsebene konstant bleibt. Zur Anpassung an die Änderung der Betrachtungsentfernung kann dabei jeweils ein seitlicher Abstand zwischen dem Intensitätsschwerpunkt innerhalb eines Bildpunkts der ersten Untergruppe und dem Intensitätsschwerpunkt innerhalb eines nächstgelegenen, dem jeweiligen Bildpunkt der ersten Untergruppe entsprechenden Bildpunkts der zweiten Untergruppe verändert werden. Wenn das Barrierenraster zwischen dem Matrixbildschirm und dem Betrachter angeordnet ist, geschieht das zweckmäßigerweise durch ein Verringern des genannten Abstands bei einer Vergrößerung der Betrachtungsentfernung und durch ein Vergrößern des genannten Abstandes bei einem Verkleinern der Betrachtungsentfernung. Zum Bestimmen der sich ändernden Betrachtungsentfernung kann die Kopfposition des Betrachters dabei direkt oder indirekt detektiert werden, wobei die Kopfposition nicht notwendigerweise bezüglich aller Freiheitsgrade bestimmt werden muss.

Bei einer bevorzugten Ausführung der Erfindung werden die Intensitäten der Subpixel aller Bildpunkte so gewichtet, dass innerhalb der mit der Kopfposition detektierten Betrachtungsebene die Schwerpunkte der Intensitätsverteilungen des von den verschiedenen Bildpunkten der ersten Untergruppe ausgehenden Lichts in der linken Betrachtungszone aufeinander fallen und die Schwerpunkte der Intensitätsverteilungen des von den verschiedenen Bildpunkten der zweiten Untergruppe ausgehenden Lichts in der rechten Betrachtungszone aufeinander fallen. Das entspricht einer Ansteuerung des Matrixbildschirms, die optimiert ist für eine Kopfposition, bei der das linke Auge des Betrachters in der Betrachtungsebene im gemeinsamen Schwerpunkt der Intensitätsverteilungen des von den Bildpunkten der ersten Untergruppe ausgehenden Lichts liegt und das rechte Auge des Betrachters im gemeinsamen Schwerpunkt der Intensitätsverteilungen des von den Bildpunkten der zweiten Untergruppe ausgehenden Lichts in der rechten Betrachtungszone.

In dieser Schrift seien dabei verschiedene Schwerpunkte von Intensitäten, die geringfügig, aber vorzugsweise nicht mehr als 5 mm, besonders vorzugsweise nicht mehr als 3 mm seitlich voneinander entfernt liegen, noch als aufeinander fallend bezeichnet. Ein Nachführen der Darstellung bei sich ändernder Betrachtungsentfernung in beschriebener Art soll bei bevorzugten Ausführungen der Erfindung über einen mindestens 30 cm tiefen Bereich verschiedener Betrachtungsentfernungen möglich sein, damit eine hinreichende Unempfindlichkeit gegenüber Kopfbewegungen erreicht wird. Der Begriff Intensitätsschwerpunkt oder Schwerpunkt einer Intensität sei jeweils verstanden als der Ort, der sich durch Integrieren der mit der jeweiligen Strahlungsleistung bzw. Strahlungsintensität gewichteten Ortskoordinaten über einen (endlich ausgedehnten) Bildpunkt bzw. über die Betrachtungsebene oder den in die entsprechende Betrachtungszone fallenden Teil der Betrachtungsebene ergibt. Stereoskopische Halbbilder im Sinne der vorliegenden Schrift seien beliebige Bilder, die jeweils zusammen mit einem anderen Halbbild eines Paares von Halbbildern als dreidimensionales Stereobild wahrnehmbar sind. Mit dem hier beschriebenen Verfahren kann dabei selbstverständlich auch eine Mehrzahl von Stereobildern, die sich jeweils in beschriebener Weise aus zwei stereoskopischen Halbbildern zusammensetzen, in Folge dargestellt werden, beispielsweise zur Wiedergabe eines 3D-Films.

Um zusätzlich eine möglichst stetige Nachführung einer seitlichen Bewegung des Betrachters zu gewährleisten, können die Intensitätsschwerpunkte innerhalb der Bildpunkte bei einer seitlichen Änderung der Kopfposition durch ein Anpassen der Gewichtung der Intensitäten proportional zu dieser Änderung seitlich verschoben werden.

Eine vorteilhafte Vorrichtung zum autostereoskopischen Darstellen von Bildinformationen, die programmtechnisch zum Durchführen des beschriebenen Verfahrens eingerichtet ist, umfasst also einen Matrixbildschirm mit einer Vielzahl von in Zeilen und Spalten angeordneten, in ihrer Intensität veränderbaren Subpixeln, die in eine Vielzahl von Subpixelgruppen zum Wiedergeben jeweils eines Bildpunkts zusammengefasst sind, ein parallel zu dem Matrixbildschirm angeordnetes Barrierenraster, mit dem von den Bildpunkten ausgehendes Licht in jeweils eine von zwei benachbarten Betrachtungszonen leitbar ist, eine Einrichtung zum Detektieren der Kopfposition eines Betrachters und eine Steuereinrichtung zum Ansteuern der Subpixel des Matrixbildschirms. Diese Vorrichtung kann insbesondere durch entsprechendes Programmieren der Steuereinrichtung für ein Verfahren vorgeschlagener Art geeignet ausgeführt werden. Das Barrierenraster kann, um seine Funktion zu erfüllen, beispielsweise parallel zu einer Spaltenrichtung des Matrixbildschirms verlaufende Gitterlinien, Prismenelemente oder Zylinderlinsen umfassen, wobei die Spaltenrichtung senkrecht zur Zeilenrichtung oder auch schräg dazu verlaufen kann.

Das Ansteuern der Subpixel innerhalb jedes der Bildpunkte mit einer subpixelabhängig gewichteten Intensität kann realisiert werden, indem zum Ansteuern der Subpixel ein sich aus den Bildinformationen ergebender Intensitätswert für einen Bildpunkt für jeden Subpixel des Bildpunkts mit einem Wert einer Gewichtungsfunktion multipliziert wird, wobei diese Gewichtungsfunktion von den Bildinformationen unabhängig ist, eine von der Kopfposition und einem Ort des Bildpunkts abhängende Form hat und für jeden Subpixel des Bildpunkts ein innerhalb jeder Zeile ortsabhängiges Gewicht definiert. Die Abhängigkeit dieser Gewichtungsfunktionen von der Kopfposition kann so gestaltet sein, dass innerhalb der Bildpunkte - bei gegebenen Bildinformationen - eine Strahlungsleistung an der sich seitlich verschiebenden Stelle des Intensitätsschwerpunkts konstant bleibt, damit sich ein Helligkeitseindruck, den der Betrachter wahrnimmt, mit der Veränderung der Kopfposition trotz eventueller Abschattungen von Randbereichen der Bildpunkte nicht verändert. Es kann auch zweckmäßig sein, die Gewichtungsfunktionen so zu gestalten, dass eine Gesamtstrahlungsleistung der Subpixel eines Bildpunkts bei gleich bleibenden Bildinformationen, aber sich ändernder Kopfposition des Betrachters konstant bleibt. Die Orte der Intensitätsschwerpunkte fallen typischerweise mit einem Maximum der entsprechenden Gewichtungsfunktion zusammen. Wo diese Maxima bzw. die Intensitätsschwerpunkte innerhalb der einzelnen Bildpunkte bei einer gegebenen Kopfposition und einem gegebenen Augenabstand liegen sollen, ergibt sich für den Fachmann in einfacher und eindeutiger Weise aus geometrischen Parametern der verwendeten Vorrichtung, nämlich neben dem Augenabstand und der Betrachtungsentfernung insbesondere aus einer Periodenlänge des Barrierenrasters und einem Abstand zwischen dem Matrixbildschirm und dem Barrierenraster. Der bei einer sich ändernden Betrachtungsentfernung gleich bleibende seitliche Abstand zwischen dem Schwerpunkt der Intensitätsverteilungen in der linken Betrachtungszone und dem Schwerpunkt der Intensitätsverteilung in der rechten Betrachtungszone, sollte dabei dem Augenabstand entsprechen.

Bei einer einfachen Ausführung der Erfindung kann für den Augenabstand ein durchschnittlicher Wert von - einem Bevölkerungsdurchschnitt entsprechend - beispielsweise 65 mm angenommen werden, weil die Betrachtungszonen eine endliche Ausdehnung haben. Eine vorteilhafte Weiterentwicklung sieht dagegen vor, dass zusätzlich zur Kopfposition ein seitlicher Augenabstand des Betrachters ermittelt wird und die Intensitäten innerhalb der Bildpunkte so gewichtet werden, dass der seitliche Abstand zwischen dem Schwerpunkt der Intensitätsverteilungen in der linken Betrachtungszone und dem Schwerpunkt der Intensitätsverteilungen in der rechten Betrachtungszone innerhalb der Betrachtungsebene, also in einer der Betrachtungsentfernung entsprechenden Entfernung vom Matrixbildschirm bzw. vom Barrierenraster, dem ermittelten Augenabstand entspricht. Dazu kann die verwendete Vorrichtung zusätzlich eine Einrichtung zum Ermitteln eines Augenabstands des Betrachters umfassen, beispielsweise mit mindestens einer Videokamera, die ein Gesicht des Betrachters aufnimmt, wobei der Augenabstand dann durch Auswerten so gewonnener Bilder ermittelt werden kann.

Um ein möglichst komfortables Stereosehen zu ermöglichen, wird die Änderung der Kopfposition bei bevorzugten Ausführungen der Erfindung berührungslos mit einem Trackingverfahren detektiert. Dazu kann die Einrichtung zum Detektieren der Kopfposition mindestens eine Videokamera umfassen, die unter Umständen zugleich zum Ermitteln des Augenabstands verwendet wird, wobei die Kopfposition wieder durch ein Auswerten damit gewonnener Bilder ermittelt wird - bei einer Verwendung mehrerer Kameras z.B. mit Hilfe eines Triangulationsverfahrens.

Die Ansteuerung des Matrixbildschirms kann so ausgeführt werden, dass sich in jeder Zeile des Matrixbildschirms Bildpunkte der ersten Untergruppe mit Bildpunkten der zweiten Untergruppe abwechseln. Dann kann ein vorteilhaft einfach ausgeführtes statisches Barrierenraster verwendet werden. Alternativ können die Bildpunkte der beiden Untergruppen aber auch durch die selben Subpixel gebildet werden, die dann zeitsequenziell angesteuert werden, um abwechselnd Bildpunkte der beiden stereoskopischen Halbbilder wiederzugeben, wobei das Barrierenraster dazu synchron zwischen zwei Zuständen umgeschaltet wird, um von den Bildpunkten ausgehendes Licht alternierend in die linke Betrachtungszone für das linkes Auge und in die rechte Betrachtungszone für das rechtes Auge des Betrachters zu leiten.

Eine vorteilhafte Ausführung der Erfindung sieht vor, dass der Matrixbildschirm zum Wiedergeben farbiger Stereobilder geeignet ist. Dazu kann jeder Bildpunkt mit mindestens drei Zeilen von Subpixeln und in jeder Zeile mit mindestens drei Subpixeln verschiedener Farbe gebildet werden, damit ein seitliches Verschieben der Intensitätsschwerpunkte farbneutral möglich wird. Um das sicherzustellen, ist dabei vorzugsweise eine Reihenfolge der Farben der Subpixel jedes Bildpunkts in Zeilenrichtung innerhalb des Bildpunkts zwischen den Zeilen zyklisch vertauscht. Das wiederum kann z.B. durch eine schräge Anordnung der Spalten oder durch einen zeilenweise seitlichen Versatz der Subpixel gleicher Farbe erreicht werden.

Ausführungsbeispiele der Erfindung werden nachfolgend anhand der Figuren 1 bis 4 beschrieben. Es zeigt

Fig. 1    schematisch in Aufsicht einen Aufbau einer Vorrichtung zum autostereoskopischen Darstellen von Bildinformationen in einer Ausführung der Erfindung,

Fig. 2    schematisch einen Ausschnitt aus einem Pixelfeld eines Matrixbildschirms der Vorrichtung aus Fig. 1,

Fig. 3    einen beispielhaften Verlauf einer Gewichtung über drei Subpixel, die eine Zeile eines Bildpunkts auf dem Matrixbildschirm bilden, und

Fig. 4    in einer der Fig. 3 entsprechenden, diagrammatischen Darstellung zwei Beispiele für ein seitliches Verschieben von Intensitätsschwerpunkten innerhalb eines Bildpunkts.

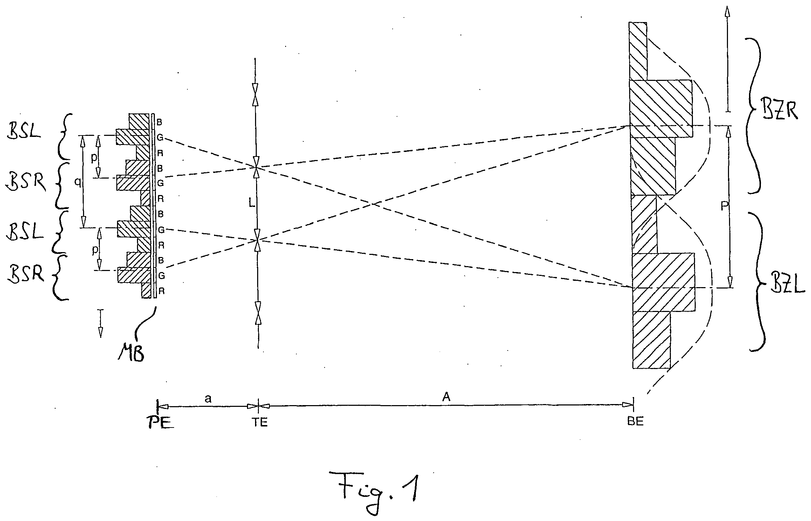

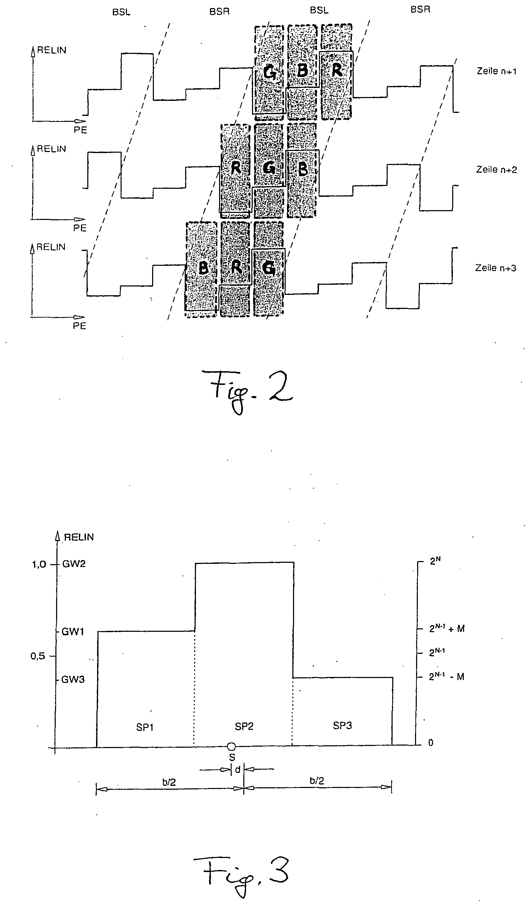

Der Aufbau eines autostereoskopischen Displays ist in Figur 1 dargestellt. Das Display besteht aus einem Matrixbildschirm MB mit der Pixelebene PE, vor der Trennelemente eines Barrierenrasters in einer zum Matrixbildschirm MB parallelen Trennebene TE angeordnet sind. Das sind beispielsweise periodisch im Abstand L voneinander angeordnete Schlitze, Prismenelemente oder Zylinderlinsen. Die Augen des Betrachters befinden sich in einer Betrachtungsebene BE. Die Abstände zwischen Pixelebene PE, Trennebene TE und Betrachtungsebene BE sind mit a und A gekennzeichnet. In der Pixelebene PE sind abwechselnd Bildspalten BSR für die rechte und BSL für die linke Stereo-Ansicht angelegt - siehe auch Figur 2. Durch das Barrierenraster wird erreicht, dass von den Bildpunkten der Bildspalten BSR ausgehendes Licht in eine rechte Betrachtungszone EZR für ein rechtes Auge eines Betrachters und von den Bildpunkten der Bildspalten BSL ausgehendes Licht in eine linke Betrachtungszone BZL für ein linkes Auge des Betrachters fällt. Die Betrachtungszonen BZR und BZL werden hier auch als Stereo-Zonen bezeichnet.

Die Bildspalten verlaufen parallel zu den optischen Elementen des auch als Trennrasters bezeichneten Barriererasters (Linsen, Schlitze). Helligkeits-Schwerpunkte oder Intensitätsschwerpunkte der Bildspalten eines Stereo-Paares BSR-BSL haben in der Pixelebene PE den Abstand p voneinander. Der Abstand von Stereo-Paar zu Stereo-Paar wird durch q gekennzeichnet.

Einen Ausschnitt aus dem Pixelfeld eines den Matrixbildschirm bildenden Panels zeigt die Figur 2. Die Bildspalten BSR und BSL für die rechte und die linke Stereo-Ansicht verlaufen hier schräg über das Panel. Neun schräg angeordnete farbige, in der Intensität veränderbare Subpixel - in Figur 2 durch R für Rot, G für Grün, B für Blau gekennzeichnet - bilden jeweils einen Bildpunkt. Von den schrägen Stereo-Zonen aus betrachtet gewährleistet diese Anordnung die Farbreinheit der Bildpunkte. Die Helligkeit jedes Subpixels wird mit einem Gewicht multipliziert. Der Gang dieser Gewichte über die Pixel-Zeilen ist in Figur 2 eingezeichnet, wobei RELIN für relative Intensität steht. Diese Funktion ist für alle Pixel-zeilen gleich, lediglich von Zeile zu Zeile um ein Subpixel versetzt.

Alternativ wäre auch eine zu den Zeilen senkrechte Orientierung der Bildspalten bei von Zeile zu Zeile zyklisch vertauschter bzw. seitlich verschobener Reihenfolge der Farben der Subpixel möglich. Denkbar sind auch andere Arrangements von Subpixeln zu einem Bildpunkt. Insbesondere können in jeder Zeile jedes Bildpunkts auch vier oder mehr als vier Subpixel enthalten sein. Andererseits können, wenn auf eine Farbwiedergabe verzichtet wird, alternativ monochrome Subpixel verwendet werden. Schließlich ist es auch denkbar, einen Matrixbildschirm mit Vielfarbpixeln einzusetzen, bei dem einzelne hintereinander angeordnete Grundfarbenpixel jeweils einen hier als Subpixel fungierenden, durch die Farben durchstimmbaren Vielfarbpixel bilden. In den zuletzt genannten Fällen kann es genügen, in einem Bildpunkt nur zwei Subpixel in jeder Zeile vorzusehen und/oder einen Bildpunkt nur aus in einer Zeile liegenden Subpixeln zu bilden. Für das Verfahren der Schwerpunktverschiebung sind die Unterschiede zwischen verschiedenen Möglichkeiten der Zusammenfassung von Subpixeln zu einem Bildpunkt aber ohne Belang. Eine weitere Ausgestaltung der Erfindung sieht vor, dass eine ungerade Anzahl von Subpixeln - beispielsweise fünf Subpixel - in einer Zeile auf jeweils einen Bildpunkt beider Halbbilder verteilt wird. Dann kann ein mittiger Subpixel je nach Kopfposition dem einen oder dem anderen Halbbild zugeordnet werden und unter bestimmten Bedingungen auch gemischt mit Bildinformation beider Halbbilder angesteuert werden. Ohnehin ist es denkbar, zusätzlich zu der hier in erster Linie beschriebenen Verschiebung von Intensitätsschwerpunkten innerhalb eines Bildpunkts zur Nachführung der Änderung der Kopfposition auch eine Neuzuordnung von Bildinformation, die jeweils einem der Halbbilder zugeordnet ist, zu Subpixeln vorzunehmen, die durch die - typischerweise seitliche - Änderung jeweils einem anderen Auge des Betrachters sichtbar werden. Einzelne Subpixel können dann im Verlauf einer Änderung der Kopfposition u.U. zunächst einem Bildpunkt des einen und dann einem Bildpunkt des anderen stereoskopischen Halbbilds zugeordnet sein.

Durch geeignete Wichtung lassen sich also in der Pixelebene die Helligkeits-Schwerpunkte oder Intensitätsschwerpunkte der Bildspalten nach links oder rechts verschieben. Das hat zur Folge, dass sich die Stereo-Zonen in der Betrachtungsebene BE dem entgegen bewegen, verstärkt um das A/a-fache. Wird lediglich der Abstand q zwischen den Bildspalten verändert, so bewegt sich die Betrachtungsebene BE auf das Display zu oder von ihm weg. Mit dem Abstand p zwischen den Helligkeits-Schwerpunkten lässt sich ein in Fig. 1 eingezeichneter Abstand P zwischen den Stereo-Kanälen in der Betrachter-Ebene einstellen, der definiert ist als Distanz zwischen einem Schwerpunkt einer resultierenden Intensitätsverteilung in der linken Betrachtungsebene BZL und einem Schwerpunkt einer resultierenden Intensitätsverteilung in der rechten Betrachtungszone BZR, und zwar innerhalb der Betrachtungsebene BE.

Die Figur 3 zeigt den Verlauf einer Gewichtung der Intensität über ein Subpixel-Tripel einer Breite b mit drei Subpixeln SP1, SP2 und SP3. Die Gewichte GW können hier aufgrund einer digitalen Ansteuerung der Subpixel nur in $2^N$ diskreten Stufen verändert werden, so dass sich der Schwerpunkt S auch nur schrittweise verschieben lässt.

Eine Verschiebung um die volle Breite eines Subpixels bei größtmöglicher Pixel-Helligkeit ist dann realisierbar, wenn die Gesamt-Fläche unter der Treppen-Kurve zu 2/3*b gewählt wird. Das entspricht der Fläche zweier Subpixel, die entweder vollständig auf die beiden Subpixel SP1 und SP2 oder SP2 und SP3 verlagert werden kann. Der Schwerpunkt verschiebt sich dann um b/6 in die eine oder in die andere Richtung, also insgesamt um die Breite eines Subpixels. Die Gesamt-Fläche unter dem Treppenzug - und damit die Heiligkeit und Farbe des Pixels - bleibt dabei unverändert:

$$\text{GW1} + \text{GW2} + \text{GW3} = \text{konstant}$$

Dabei stehe GW1, GW2 und GW3 für die Gewichte GW für die drei Subpixel SP1, SP2 und SP3. Allgemein gilt für die Verschiebung d des Schwerpunktes aus der hier als Pixel-Mitte bezeichneten Mitte des Bildpunkts in der entsprechenden Zeile:

$$\text{d}=[(\text{GW3}-\text{GW1})/(\text{GW1}+\text{GW2}+\text{GW3})]*(\text{b}/3)$$

Wegen des Bezugs auf die Pixel-Mitte hat das Gewicht GW2 keinen Einfluss auf die Schwerpunkt-Lage. Die kleinstmögliche Verschiebung hängt davon ab, in welcher Weise die Gewichte umverteilt werden: Die Figur 3 zeigt eine Anordnung, bei der dem mittleren Subpixel SP2 alle $2^N$ möglichen Flächenanteile zugeordnet sind, und die restlichen $2^N$ sich auf die beiden Subpixel SP1 und SP3 verteilen. Bei symmetrischer Gewichts-Verteilung haben die beiden außen liegenden Subpixel jeweils $2^{N-1}$ Flächenanteile. Figur 3 zeigt den Zustand, bei dem abweichend davon M Anteile von SP3 nach SP1 verlagert wurden, die Gewichte also wie folgt verteilt sind:

$$\text{GW1}=(\text{b}/3)*(2^{N-1}+\text{M})/2^N$$

$$\text{GW2}=(\text{b}/3)$$

$$\text{GW3}=(\text{b}/3)*(2^{N-1}-\text{M})/2^N$$

Dabei kann M die Werte $0 \leq M \leq 2^{N-1}$ annehmen. Der Schwerpunkt rückt somit um

$$d = M*b/(3*2^N)$$

von der Mitte des Tripels in Richtung SP1. Die kleinste Schrittweite beträgt in diesem Fall $b/(3*2^N)$.

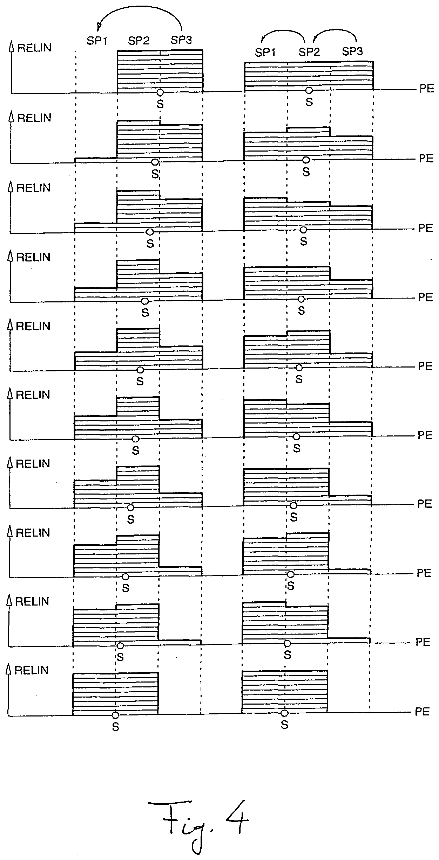

Die Verlagerung des Schwerpunktes bei dieser Vorgehensweise ist auf der linken Seite der Figur 4 skizziert. Eine andere Möglichkeit ist rechts in Figur 4 dargestellt. Dabei wird ein Anteil von SP3 zunächst beim mittleren Subpixel SP2 zwischengelagert und erst im nächsten Schritt zu SP1 gebracht. Der Schwerpunkt verschiebt sich dabei pro Schritt nur halb soweit, nämlich um

$$d = b/(6*2^N)$$

Bei der in Figur 4 rechts veranschaulichten Ausführung des Verfahrens zum seitlichen Verschieben des Intensitätsschwerpunkts innerhalb eines Bildpunkts durch ein Ändern der Gewichtung der Intensitäten der entsprechenden Subpixel hat die wechselnde Verteilung der Gewichte über die Subpixel SP1, SP2 und SP3 eine Änderung der wahrgenommenen Helligkeit beim Verschieben des Intensitätsschwerpunkts zur Folge. Das kann jedoch bei Bedarf durch eine dynamische Anpassung der Gewichte kompensiert werden.

Mit großer Näherung ergibt sich die zuletzt genannte Schrittweite auch, wenn bei einem der äußeren Subpixel SP1 oder SP3 ein Flächenelement weggenommen oder hinzugefügt wird. Die Fläche unter dem Treppenzug weicht dabei nur um ein Flächenelement vom 'Sollwert' 2/3*b ab. Bei einer feinen Flächen-Stufung ist die damit einhergehende Schwankung der Pixel-Helligkeit vom Betrachter so gut wie nicht wahrnehmbar.

Noch weiter lässt sich die Schrittweite verfeinern, wenn die Verlagerung der Flächenelemente sukzessive auf die 3 Pixel-Zeilen eines Bildpunktes verteilt wird. Beispielsweise kann zunächst vom linken Subpixel der Zeile n+1 in Figur 2 ein Flächenelement entnommen werden, dann vom linken Subpixel der Zeile n+2 und schließlich vom linken Subpixel der Zeile n+3. Wenn dies bei allen Bildpunkten einer Bildspalte durchgeführt wird, verschiebt sich ihr Schwerpunkt um die 3-fach kleinere Strecke

$$d = b/(18*2^N).$$

Die beschriebene Verlagerung der Intensitätsschwerpunkte in den Bildpunkten wird nun für laterales und frontales Tracking der Stereo-Zonen benutzt. Beim lateralen Tracking werden die Bildstreifen oder genauer die Intensitätsschwerpunkte in der Pixel-Ebene seitlich im Verhältnis a/A entgegen der Bewegung des Betrachters verschoben. Beim frontalen Tracking wird zwischen allen linken und zwischen allen rechten Bildstreifen BSL/BSR der folgende Abstand eingestellt:

$$q = (1+a/A)*L$$

Für ein veranschaulichendes Beispiel soll Folgendes gelten:
Der Augenabstand beträgt P=65 mm, der Pixel-Pitch oder die Breite der Bildpunkte in einer Zeile b=0,264 mm. Für den nominellen Betrachtungsabstand A=600 mm soll p=b und q=2b gelten. Damit sind auch der Abstand L der Streifen auf der Schlitzmaske und der Abstand a zwischen Panel und Schlitzraster festgelegt.

In der nachfolgenden - anschließend noch genauer erläuterten - Tabelle sind insbesondere für eine Reihe von Betrachtungsentfernungen A die zugehörigen Abstände q der Schwerpunkte aufgelistet:

| A [mm] | $\Delta$A [mm] | q [mm] | $\Delta$q [mm] | P [mm] | $\Delta$P [mm] | p [mm] | $\Delta$p [mm] | $\Delta$p/$\Delta$q |
|---|---|---|---|---|---|---|---|---|
| 450 | -150 | 0,528712 | 0,0007 | 49 | -16 | 0,3520 | 0,088 | 123,6 |
| 475 | -125 | 0,528562 | 0,0006 | 51 | -14 | 0,3335 | 0,069 | 123,6 |
| 500 | -100 | 0,528427 | 0,0004 | 54 | -11 | 0,3168 | 0,053 | 123,6 |
| 525 | -75 | 0,528305 | 0,0003 | 57 | -8 | 0,3017 | 0,038 | 123,6 |
| 550 | -50 | 0,528194 | 0,0002 | 60 | -5 | 0,2880 | 0,024 | 123,6 |
| 575 | -25 | 0,528093 | 0,0001 | 62 | -3 | 0,2755 | 0,011 | 123,6 |
| 600 | 0 | 0,528000 | 0 | 65 | 0 | 0,2640 | 0 | |
| 625 | 25 | 0,527915 | -0,0001 | 68 | 3 | 0,2534 | -0,011 | 123,6 |

(fortgesetzt)

| A | ΔA | q | Δq | P | ΔP | p | Δp | Δp/Δq |
|---|---|---|---|---|---|---|---|---|
| [mm] | [mm] | [mm] | [mm] | [mm] | [mm] | [mm] | [mm] | |
| 650 | 50 | 0,527836 | -0,0002 | 70 | 5 | 0,2437 | -0,020 | 123,6 |
| 675 | 75 | 0,527763 | -0,0002 | 73 | 8 | 0,2347 | -0,029 | 123,6 |
| 700 | 100 | 0,527695 | -0,0003 | 76 | 11 | 0,2263 | -0,038 | 123,6 |
| 725 | 125 | 0,527632 | -0,0004 | 79 | 14 | 0,2185 | -0,046 | 123,6 |
| 750 | 150 | 0,527573 | -0,0004 | 81 | 16 | 0,2112 | -0,053 | 123,6 |

In der Spalte Δq ist die Änderung des SchwerpunktAbstandes angegeben, bezogen auf den Wert für die Nominalentfernung. Demzufolge muss q nur sehr wenig geändert werden, um die durch eine Kopfposition des Betrachters definierte Betrachtungsebene BE zu verschieben.

Die Betrachtungsbene BE sollte in Schritten von etwa 25 mm bis 50 mm nachgeführt werden können, was nach Tabelle 1 eine rechnerische Genauigkeit für q von |Δq|<0,0001 mm/2=0,00005 mm erfordert. Das bedeutet aber nicht, dass diese enge Toleranz für die Lage der Bildstreifen erforderlich ist. Das soll im Folgenden erläutert werden: Durch das schräge Muster der Bildspalten in der Pixelebene PE verlaufe eine waagerechte Linie. Der Treffpunkt dieser Linie mit dem Schwerpunkt der ersten linken Bildspalte bilde nun den Bezugspunkt, von dem aus die Abstände aller anderen Bildspalten rechts davon gemessen werden. Die Geraden von den Schwerpunkten aller linken (rechten) Bildstreifen durch die Mitten der zugeordneten Trennelemente (Linsen, Schlitze) in der Trennebene TE schneiden sich alle in einem Punkt der Betrachtungsebene BE. Bei einem realen Display wird das aber nicht der Fall sein. Vollkommen akzeptabel ist es, wenn alle Geraden die Betrachtungsebene beispielsweise in einem Abstand <2,5 mm vom ideellen Punkt durchstoßen. Das bedeutet, dass in der Pixelebene PE die Schwerpunkte der Bildspalten um a/A*2,5 mm = 0,010 mm vom Sollwert abweichen dürfen. Die Schwerpunkte der Bildspalten müssen also in den folgenden Toleranzbereichen liegen, gemessen vom Bezugspunkt:

n*q±0,010 mm mit n=1, 2, 3,...

Dabei ist q der exakte Rechenwert. Um diese Toleranz einzuhalten muss d≤Δq mit Δq = 0,010 mm gelten. Bezogen auf die Pixel-Breite liefert das über die Bedingung b/d≥b/Δq für die Schrittweite d=b/(3*2$^N$) (entsprechend der ersten oben beschriebenen Art der Schwerpunktverschiebung) eine Vorgabe für die kleinstmögliche Stufungs-Zahl N:

$$3*2^N \geq b/\Delta q$$

Mit b=0,264 mm und Δq=0,010 mm ergibt sich 3*2$^N$≥26,4 oder N≥3,2. Für die geforderte Tiefen-Auflösung reichen also bereits 4 Bit für die Aussteuerung einzelner Subpixel vollständig aus.

In der Spalte P der obigen Tabelle ist der Abstand der Stereo-Kanäle in der Betrachterebene BE ohne Nachführen der Intensitätsschwerpunkte vermerkt. Diese Werte ergeben sich, wenn die Schwerpunkte der beiden Bildstreifen BSR, BSL eines Stereo-Paares in der Pixelebene PE jeweils den Abstand p = q/2 voneinander haben. Die Bildstreifen auf dem Panel sind dann alle äquidistant, und damit das Übersprechen zwischen den Stereo-Kanälen minimal. Wegen der unterschiedlichen Augenabstände der Betrachter wäre eine solche Ansteuerung aber nur bei sehr breiten Stereo-Kanälen möglich, weil die Augen sonst im Extremfall die Stereo-Teilbilder nicht mehr gleichzeitig sehen können. Die Kanäle müssten dann also breiter sein als der Bereich, den P in der genannten Tabelle überstreicht, nach Tabelle 1 also breiter als (81 mm - 49 mm) = 32 mm.

Ein konstanter Abstand P zwischen den Stereo-Kanälen, der dem Augenabstand entspricht, ist daher wünschenswert. Dies lässt sich durch Anpassung des Streifenabstandes p an die Betrachtungsentfernung A zuwege bringen. Dafür gilt:

$$p=a*P/A$$

Die entsprechenden Werte sind in obiger Tabelle aufgelistet. Danach ändert sich p wesentlich stärker mit der Betrachtungsentfernung, als q das tut. Das Verhältnis der beiden Änderungen ist allerdings konstant und hat den Wert:

$$\Delta p/\Delta q = P/L = 1/2 (P/p + 1)$$

Die letzte Gleichheit ergibt sich dabei, wenn auf der rechten Seite dieser Gleichung für p der für die nominelle Betrachtungsentfernung gültige Wert eingesetzt wird. Die folgende Tabelle gibt zu einigen realistischen Augenabständen P für Entfernungen zwischen 450 mm und 750 mm die Werte von p und die dazugehörigen prozentualen Abweichungen vom Nominalwert p = 0,264 mm an:

| P | 60 mm | | 62,5 mm | | 65 mm | | 67,5 mm | | 70 mm | |
|---|---|---|---|---|---|---|---|---|---|---|
| A | p | Δp | p | Δp | p | Δp | p | Δp | p | Δp |
| [mm] | [mm] | % | [mm] | % | [mm] | % | [mm] | % | [mm] | % |
| 450 | 0,325 | 23 | 0,338 | 28 | 0,352 | 33 | 0,366 | 38 | 0,379 | 44 |
| 425 | 0,279 | 5 | 0,290 | 10 | 0,302 | 14 | 0,313 | 19 | 0,325 | 23 |
| 600 | 0,244 | -8 | 0,254 | -4 | 0,264 | 0 | 0,274 | 4 | 0,284 | 8 |
| 675 | 0,217 | -18 | 0,226 | -15 | 0,235 | -11 | 0,244 | -8 | 0,253 | -4 |
| 750 | 0,195 | -26 | 0,203 | -23 | 0,211 | -20 | 0,219 | -17 | 0,227 | -14 |

Bei einer maximal möglichen Änderung des SchwerpunktAbstandes von einer Subpixel-Breite - also $|\Delta p| \leq 33\%$ - können danach die Stereo-Kanäle im gesamten Entfernungsbereich dem Augen-Abstand angepasst werden, solange dieser kleiner als 65 mm ist. Bei größeren Augen-Abständen ist die Anpassung lediglich im Nahbereich schwierig.

Bei dem mit der Vorrichtung aus Fig. 1 durchgeführten Verfahren wird nun eine Änderung der Kopfposition des Betrachters detektiert, und zwar bei dem bevorzugten Ausführungsbeispiel berührungslos mit einem Trackingverfahren, für das mindestens eine Videokamera zur Beobachtung der Kopfposition verwendet wird, wobei die Ansteuerung der Subpixel an die detektierte Änderung der Kopfposition bei einer Bewegung des Betrachters angepasst wird. Dazu werden die Subpixel innerhalb jedes der Bildpunkte mit einer zusätzlich zu den Bildinformationen der beiden Stereo-Bilder zeilenweise subpixelabhängig gewichteten Intensität angesteuert, so dass durch ein Ändern der Gewichtung in beschriebener Art der Intensitätsschwerpunkt innerhalb des jeweiligen Bildpunkts und damit der Schwerpunkt der seitlichen Intensitätsverteilung des von diesem Bildpunkt ausgehenden Lichts in der entsprechenden Betrachtungszone BZR oder BZL seitlich verschiebbar ist. Die Intensitätsschwerpunkte, die in den Fign. 3 und 4 mit S bezeichnet sind und sich durch ein Summieren der mit den jeweiligen Intensitäten gewichteten Ortskoordinaten der Subpixel des entsprechenden Bildpunkts ergeben, werden dabei innerhalb der Bildpunkte bei einer Änderung der Betrachtungsentfernung A, also des Abstands zwischen Kopfposition und Matrixbildschirm MB, durch ein Anpassen der Gewichtung der Intensitäten so verschoben, dass der seitliche Abstand P zwischen dem Schwerpunkt der Intensitätsverteilung in der linken Betrachtungszone BZL und dem Schwerpunkt der Intensitätsverteilung in der rechten Betrachtungszone BZR innerhalb der sich mit der Kopfposition verändernden Betrachtungsebene BE konstant bleibt. Insbesondere soll in dem Ausführungsbeispiel bei einer beliebigen Änderung des Betrachtungsabstands A zwischen 450 mm und 750 mm der Abstand P um nicht mehr 3 mm von dem Sollwert 65 mm abweichen.

Die Intensitäten der Subpixel aller Bildpunkte in dem Matrixbildschirm MB aus Fig. 1 werden dabei so gewichtet, dass die Schwerpunkte der jeweiligen Intensitätsverteilungen innerhalb der Betrachtungsebene BE in den Betrachtungszonen BZR und BZL jeweils alle in Deckung liegen. Wenn eine seitliche Bewegung des Betrachters detektiert wird, werden die Intensitätsschwerpunkte innerhalb der Bildpunkte für eine Nachführung proportional zu einer seitlichen Änderung der Kopfposition seitlich verschoben, so dass die Schwerpunkte der Intensitäten in den Betrachtungszonen BZR und BZL immer zumindest annähernd mit den Positionen der beiden Augen des Betrachters in Deckung liegen.

Bei einer bevorzugten Weiterbildung des Ausführungsbeispiels, das anhand der Figuren 1 bis 4 beschrieben worden ist, wird zusätzlich zur Kopfposition auch ein seitlicher Augenabstand des Betrachters ermittelt, und zwar vorzugsweise mit den Videokameras, die auch zum Detektieren der Kopfposition verwendet werden. Die Intensitäten innerhalb der Bildpunkte werden dann so gewichtet, dass der seitliche Abstand P zwischen dem Schwerpunkt der Intensitätsverteilungen in der linken Betrachtungszone BZL und dem Schwerpunkt der Intensitätsverteilungen in der rechten Betrachtungszone BZR innerhalb der Betrachtungsebene BE dem ermittelten Augenabstand entspricht.

Die Subpixel des Matrixbildschirms MB werden zum autostereoskopischen Darstellen der Bildinformationen, die von dem Betrachter dreidimensional wahrgenommen werden sollen, angesteuert, indem innerhalb jedes der Bildpunkte ein sich aus den Bildinformationen ergebender Intensitätswert für jeden Subpixel des jeweiligen Bildpunkts mit dem entsprechenden Gewicht GW multipliziert wird, wobei die Gewichte GW als Werte einer in den Fign. 2 bis 4 veranschaulichten Gewichtungsfunktion für jeden Bildpunkt interpretierbar sind und wobei diese Gewichtungsfunktionen von den Bildinformationen unabhängig sind und eine von der Kopfposition und einem Ort des Bildpunkts abhängende Form haben.

Ein anderes Ausführungsbeispiel der Erfindung, das eine Alternative zu der anhand Fig. 1 beschriebenen Vorrichtung bildet, sieht vor, dass das Barrierenraster synchronisiert mit den Subpixeln des Matrixbildschirms MB zwischen zwei Zuständen umschaltbar ist, um von den Bildpunkten ausgehendes Licht alternierend in die linke Betrachtungszone BZL und die rechte Betrachtungszone BZR zu leiten. Dann werden die Bildpunkte des Stereo-Bildes für das linke Auge und die Bildpunkte des Stereo-Bildes für das rechte Auge - anders als bei dem zuvor beschriebenen Ausführungsbeispiel - durch dieselben Subpixel gebildet, die dazu zeitsequentiell angesteuert werden, und zwar synchron zu einem Umschalten des Barrierenrasters zwischen den beiden Zuständen.

Mit der vorliegenden Erfindung wird also ein Verfahren vorgeschlagen, das eine fließende, kontinuierliche elektronische Bildnachführung ohne wahrnehmbare Umschalteffekte bei allen Kopfbewegungen des Betrachters parallel und im Abstand zum Matrixbildschirm MB mit gleichbleibend hoher Abbildungsqualität hinsichtlich Bildauflösung, Kanalübersprechen oder anderen Störeffekten gewährleistet. Dieses Verfahren hat den Vorteil, den Abstand zwischen den effektiven Schwerpunkten, also den Orten höchster Strahlungsintensität, in den Betrachtungszonen BZL und BZR für das linke und rechte Betrachterauge an den Augenabstand des Betrachters anzupassen und bei Änderungen des Betrachterabstands konstant zu halten. Das Verfahren lässt sich in einfacher Weise durch eine entsprechende Programmierung einer den Matrixbildschirm MB ansteuernden Steuereinrichtung realisieren. Damit ist das Verfahren einfach und kostengünstig umsetzbar, wobei es vorteilhafterweise in Echtzeit arbeiten kann und störungsresistent ist. Mit der Erfindung wird also ein Tracking bei autostereoskopischen Displays realisiert, bei dem der Betrachter einen stereoskopischen Bildeindruck auch bei Positionswechsel behält.

Durch das hier beschriebene Verfahren vergrößert sich dabei der Bereich, in dem das Stereobild in guter Qualität wahrgenommen werden kann. Von besonderem Vorteil ist bei bevorzugten Ausführungen der Erfindung, dass auch Personen mit unterschiedlichen Augenabständen gleichermaßen gut den stereoskopischen Effekt wahrnehmen können. Die Erfindung kann in vorteilhafter Weise für viele verschiedene Anwendungen eingesetzt werden, beispielsweise im Zusammenhang mit Gaming, minimal-invasiver Chirurgie, Multimedia, VR, Werbung, Fernsteuersystemen und pädagogischen Anwendungen, beispielsweise in Museen.

Die mit der vorliegenden Schrift vorgeschlagene Vorrichtung weist also, wie zusammenfassend festgehalten werden kann, einen Matrixbildschirm MB mit einer Vielzahl von in Zeilen und Spalten angeordneten, in ihrer Intensität veränderbaren Subpixeln auf, die in eine Vielzahl von Subpixelgruppen zum Wiedergeben jeweils eines Bildpunkts zusammengefasst sind, außerdem ein parallel zu dem Matrixbildschirm MB angeordnetes Barrierenraster, mit dem von den Bildpunkten ausgehendes Licht in jeweils eine von zwei benachbarten Betrachtungszonen BZL und BZR leitbar ist, sowie eine Einrichtung zum Detektieren einer Kopfposition eines Betrachters und eine Steuereinrichtung zum Ansteuern der Subpixel des Matrixbildschirms MB. Die Bildpunkte sind dabei jeweils einer von zwei Untergruppen zugeordnet, wobei diese Untergruppen dadurch definiert sind, dass das von den Bildpunkten der einen Untergruppe ausgehende Licht durch das Barrierenraster in die linke Betrachtungszone BZL für ein linkes Betrachterauge und das von den Bildpunkten der anderen Untergruppe ausgehende Licht durch das Barrierenraster in die rechte Betrachtungszone BZR für ein rechtes Betrachterauge fällt.

Diese Vorrichtung ist vorzugsweise zur Durchführung des beschriebenen Verfahrens zum autostereoskopischen Darstellen von Bildinformationen eingerichtet, indem die Steuereinrichtung zur Ausführung folgender Schritte programmiert ist:

- Ansteuern des Matrixbildschirms so, dass zwei stereoskopische Halbbilder auf jeweils einer der zwei Untergruppen von Bildpunkten abgebildet werden, wobei die Subpixel innerhalb jedes der Bildpunkte unter Verwendung jeweils einer bildpunktabhängigen Gewichtungsfunktion mit einer zusätzlich zu den Bildinformationen zeilenweise subpixelabhängig gewichteten Intensität angesteuert werden derart, dass ein Intensitätsschwerpunkt S innerhalb des jeweiligen Bildpunkts und damit ein Schwerpunkt einer seitlichen Intensitätsverteilung des von diesem Bildpunkt ausgehenden Lichts in der entsprechenden Betrachtungszone BZL oder BZR durch ein Ändern der Gewichtungsfunktion seitlich verschiebbar ist,
- Auswerten einer von der Einrichtung zum Detektieren der Kopfposition ermittelten Information über eine Betrachtungsentfernung A zwischen der Kopfposition und dem Matrixbildschirm MB,
- Anpassen einer Ansteuerung der Subpixel, wenn eine Änderung der Betrachtungsentfernung A festgestellt wird, indem die Intensitätsschwerpunkte S innerhalb der Bildpunkte durch ein Anpassen der Gewichtungsfunktionen so verschoben werden, dass ein seitlicher Abstand P zwischen dem Schwerpunkt der Intensitätsverteilungen in der linken Betrachtungszone BZL und dem Schwerpunkt der Intensitätsverteilungen in der rechten Betrachtungszone BZR in einer sich mit der Betrachtungsentfernung A verändernden Betrachtungsebene BE weitestmöglich konstant bleibt.

Die Intensität, mit der ein beliebiger Subpixel angesteuert wird, ergibt sich dann also durch Multiplikation einer Intensität, die sich aus der Bildinformation für den Bildpunkt ergibt, dem dieser Subpixel zugeordnet ist, mit einem diesem Subpixel zugeordneten Wert der diesem Bildpunkt zugeordneten Gewichtungsfunktion. Zur Anpassung an eine Änderung der Kopfposition werden nun die Gewichtungsfunktionen so abgeändert, dass sich die Intensitätsschwerpunkte S innerhalb eines Bildpunktes seitlich verschieben. Eine solche Anpassung wird insbesondere bei einer Änderung der Betrachtungsentfernung A durchgeführt, und zwar so, dass sich ein Abstand p zwischen dem Intensitätsschwerpunkt S eines in die Betrachtungszone BZL strahlenden Bildpunkts und dem Intensitätsschwerpunkt S des entsprechenden in die andere Betrachtungszone BZR strahlenden Bildpunkts ändert. Dabei wird der Abstand p derart geändert, dass der seitliche Abstand P zwischen dem Schwerpunkt der Intensitätsverteilung, die durch den erstgenannten Bildpunkt in der linken Betrachtungszone BZL verursacht wird, und dem Schwerpunkt der Intensitätsverteilung, die durch den zweitgenannten Bildpunkt in der rechten Betrachtungszone BZR verursacht wird, in der um die Betrachtungsentfernung A vom Matrixbildschirm MB (z.B. von der Pixelebene PE oder vom Barrierenraster) entfernten und sich mit A ändernden Betrachtungsebene BE möglichst konstant bleibt. Wie der Wert von p dafür geändert werden muss, ergibt sich durch einfache trigonometrische Berechnungen, wie der Fachmann unschwer aus den geometrischen Zusammenhängen erkennen kann, die z.B. in Fig. 1 dargestellt sind sind.

Die vorstehend benutzten Abkürzungen und Formelzeichen sind der Übersichtlichkeit halber in der folgenden Tabelle 3 zusammengefasst und noch einmal kurz erläutert:

| a | Abstand zwischen Matrixbildschirm und Barrierenraster |
|---|---|
| A | Betrachtungsentfernung (Betrachterentfernung zum Matrixbildschirm) |
| R | Rot |
| G | Grün |
| B | Blau |
| MB | Matrixbildschirm |
| PE | Pixelebene |
| TE | Trennebene |
| BE | Betrachtungsebene |
| BSL | Bildspalte aus der linken Ansicht |
| BSR | Bildspalte aus der rechten Ansicht |
| BZL | Linke Betrachtungszone |
| BZR | Rechte Betrachtungszone |
| b | Pixel- oder Bildpunkt-Breite = hier Breite eines Subpixel-Tripels |
| SP | Farbsubpixel |
| n | Nummer der Pixelzeile |
| GW | Gewicht |
| N | Stufung der Gewichte |
| M | Anteile Intensität |
| RELIN | relative Intensität (Helligkeit) |
| d | Schwerpunktsverlagerung aus der Pixelmitte |
| S | Intensitätsschwerpunkt (Schwerpunkt der Bildspalte) |
| p | Schwerpunktsabstand zwischen den Bildspalten für linke und rechte Ansicht |
| q | Abstand der Schwerpunkte zwischen den Bildspalten einer einzigen Ansicht |
| L | Abstand der Schlitze oder Zylinderlinsen voneinander (Pitch) |
| P | Abstand der Stereo-Kanäle in Betrachterebene |

**Patentansprüche**

1. Verfahren zum autostereoskopischen Darstellen von Bildinformationen auf einem Matrixbildschirm (MB), auf dem eine Vielzahl von Bildpunkten durch jeweils eine Subpixelgruppe mit einer Mehrzahl von in ihrer Intensität veränderbaren, in Zeilen und Spalten angeordneten Subpixeln gebildet wird, wobei

- zwei stereoskopische Halbbilder auf jeweils einer von zwei Untergruppen der Bildpunkte abgebildet werden und von den zwei Untergruppen von Bildpunkten ausgehendes Licht durch ein Barrierenraster so in zwei benachbarte Betrachtungszonen (BZL, BZR) geleitet wird, dass das von den Bildpunkten einer ersten der beiden Untergruppen ausgehende Licht in eine linke Betrachtungszone (BZL) für ein linkes Auge und das von den Bildpunkten einer zweiten der beiden Untergruppen ausgehende Licht in eine rechte Betrachtungszone (BZR) für ein rechtes Auge eines Betrachters fällt,
- wobei die Subpixel innerhalb jedes der Bildpunkte mit einer zusätzlich zu den Bildinformationen zeilenweise subpixelabhängig gewichteten Intensität angesteuert werden derart, dass ein Intensitätsschwerpunkt (S) innerhalb des jeweiligen Bildpunkts und damit ein Schwerpunkt einer seitlichen Intensitätsverteilung des von diesem Bildpunkt ausgehenden Lichts in der entsprechenden Betrachtungszone (BZL, BZR) durch ein Ändern der Gewichtung seitlich verschiebbar ist,
- wobei ferner eine Änderung einer Kopfposition des Betrachters detektiert wird und eine Ansteuerung der Subpixel an die Änderung der Kopfposition angepasst wird

- und die Intensitätsschwerpunkte (S) innerhalb der Bildpunkte bei einer Änderung einer Betrachtungsentfernung (A) zwischen Kopfposition und Matrixbildschirm (MB) durch ein Anpassen der Gewichtung der Intensitäten so verschoben werden, dass ein seitlicher Abstand (P) zwischen dem Schwerpunkt der Intensitätsverteilungen in der linken Betrachtungszone (BZL) und dem Schwerpunkt der Intensitätsverteilungen in der rechten Betrachtungszone (BZR) in einer sich mit der Kopfposition verändernden Betrachtungsebene (BE) konstant bleibt, indem ein seitlicher Abstand (p) zwischen dem Intensitätsschwerpunkt (S) innerhalb eines Bildpunkts der ersten Untergruppe und dem Intensitätsschwerpunkt (S) innerhalb eines nächstgelegenen Bildpunkts der zweiten Untergruppe verändert wird.

2.  Verfahren nach Anspruch 1, **dadurch gekennzeichnet, dass** die Intensitäten der Subpixel aller Bildpunkte so gewichtet werden, dass innerhalb der mit der Kopfposition detektierten Betrachtungsebene (BE) die Schwerpunkte der Intensitätsverteilungen des von den verschiedenen Bildpunkten der ersten Untergruppe ausgehenden Lichts in der linken Betrachtungszone (BZL) aufeinander fallen und die Schwerpunkte der Intensitätsverteilungen des von den verschiedenen Bildpunkten der zweiten Untergruppe ausgehenden Lichts in der rechten Betrachtungszone (BZR) aufeinander fallen.

3.  Verfahren nach einem der Ansprüche 1 oder 2, **dadurch gekennzeichnet, dass** die Intensitätsschwerpunkte (S) innerhalb der Bildpunkte bei einer seitlichen Änderung der Kopfposition durch ein Anpassen der Gewichtung der Intensitäten proportional zu dieser Änderung seitlich verschoben werden.

4.  Verfahren nach einem der Ansprüche 1 bis 3, **dadurch gekennzeichnet, dass** zur Nachführung der Änderung der Kopfposition zusätzlich eine Neuzuordnung von Bildinformation zu Subpixeln erfolgt, die durch die Änderung jeweils einem anderen Auge des Betrachters sichtbar werden.

5.  Verfahren nach einem der Ansprüche 1 bis 4, **dadurch gekennzeichnet, dass** zum Ansteuern der Subpixel mit der innerhalb jedes der Bildpunkte subpixelabhängig gewichteten Intensität ein sich aus den Bildinformationen ergebender Intensitätswert für einen Bildpunkt für jeden Subpixel des Bildpunkts mit einem Wert einer Gewichtungsfunktion multipliziert wird, wobei diese Gewichtungsfunktion von den Bildinformationen unabhängig ist und eine von der Kopfposition und einem Ort des Bildpunkts abhängende Form hat und für jeden Subpixel des Bildpunkts ein innerhalb jeder Zeile ortsabhängiges Gewicht (GW) definiert.

6.  Verfahren nach einem der Ansprüche 1 bis 5, **dadurch gekennzeichnet, dass** zusätzlich zur Kopfposition ein seitlicher Augenabstand des Betrachters ermittelt wird und die Intensitäten innerhalb der Bildpunkte so gewichtet werden, dass der seitliche Abstand (P) zwischen dem Schwerpunkt der Intensitätsverteilungen in der linken Betrachtungszone und dem Schwerpunkt der Intensitätsverteilungen in der rechten Betrachtungszone innerhalb der Betrachtungsebene dem ermittelten Augenabstand entspricht.

7.  Verfahren nach einem der Ansprüche 1 bis 6, **dadurch gekennzeichnet, dass** die Änderung der Kopfposition des Betrachters berührungslos mit einem Trackingverfahren detektiert wird.

8.  Vorrichtung zum autostereoskopischen Darstellen von Bildinformationen, umfassend

    - einen Matrixbildschirm (MB) mit einer Vielzahl von in Zeilen und Spalten angeordneten, in ihrer Intensität veränderbaren Subpixeln, die in eine Vielzahl von Subpixelgruppen zum Wiedergeben jeweils eines Bildpunkts zusammengefasst sind,
    - ein parallel zu dem Matrixbildschirm (MB) angeordnetes Barrierenraster, mit dem von den Bildpunkten ausgehendes Licht in jeweils eine von zwei benachbarten Betrachtungszonen (BZL, BZR) leitbar ist,
    - eine Einrichtung zum Detektieren einer Kopfposition eines Betrachters und
    - eine Steuereinrichtung zum Ansteuern der Subpixel des Matrixbildschirms (MB),

    **dadurch gekennzeichnet,**
    **dass** die Vorrichtung programmtechnisch eingerichtet ist zum Durchführen eines Verfahrens nach einem der Ansprüche 1 bis 7.

9.  Vorrichtung nach Anspruch 8, **dadurch gekennzeichnet, dass** das Barrierenraster parallel zu einer Spaltenrichtung des Matrixbildschirms (MB) verlaufende Gitterlinien, Prismenelemente oder Zylinderlinsen umfasst.

10. Vorrichtung nach einem der Ansprüche 8 oder 9, **dadurch gekennzeichnet, dass** die Einrichtung zum Detektieren der Kopfposition mindestens eine Videokamera für ein berührungsloses Tracking umfasst.

11. Vorrichtung nach einem der Ansprüche 8 bis 10, **dadurch gekennzeichnet, dass** sie ferner eine Einrichtung zum Ermitteln eines Augenabstands des Betrachters umfasst.

12. Vorrichtung nach einem der Ansprüche 8 bis 11, **dadurch gekennzeichnet, dass** sich in jeder Zeile des Matrixbildschirms (MB) Bildpunkte einer ersten Untergruppe mit Bildpunkten einer zweiten Untergruppe abwechseln, wobei von den Bildpunkten der ersten Untergruppe ausgehendes Licht durch das Barrierenraster in eine linke Betrachtungszone (BZL) für ein linkes Auge und von den Bildpunkten der zweiten Untergruppe ausgehendes Licht in eine rechte Betrachtungszone (BZR) für ein rechtes Auge des Betrachters geleitet wird.

13. Vorrichtung nach einem der Ansprüche 8 bis 12, **dadurch gekennzeichnet, dass** das Barrierenraster synchronisiert mit den Subpixeln des Matrixbildschirms (MB) zwischen zwei Zuständen umschaltbar, um von den Bildpunkten ausgehendes Licht alternierend in eine linke Betrachtungszone (BZL) für ein linkes Auge und in eine rechte Betrachtungszone (BZR) für ein rechtes Auge des Betrachters zu leiten.

14. Vorrichtung nach einem der Ansprüche 8 bis 13, **dadurch gekennzeichnet, dass** jeder Bildpunkt mindestens drei Zeilen von Subpixeln und in jeder Zeile mindestens drei Subpixel verschiedener Farbe umfasst.

**Claims**

1. A method for the autostereoscopic representation of image information on a matrix screen (MB), on which a plurality of image points is formed by means of one subpixel group each, having a plurality of subpixels being modifiable in their intensity and being positioned in rows and columns, wherein

   two stereoscopic fields are imaged on one of two subgroups each of the image points, and wherein light emanating from the two subgroups of image points is guided through a barrier raster into two adjacent viewing zones (BZL, BZR) such that the light emanating from the image points of a first one of the two subgroups is incident into a left viewing zone (BZL) for a left eye, and the light emanating from the image points of a second one of the two subgroups is incident into a right viewing zone (BZR) for a right eye of a viewer,
   wherein the subpixels within each of the image points are activated with an intensity which is line-by-line subpixel-dependently weighed in addition to the image information such that an intensity centroid (S) within the respective image point and thus a centroid of a lateral intensity distribution of the light emanating from this image point can laterally be shifted in the corresponding viewing zone (BZL, BZR) by varying the weighting,
   wherein a change of a head position of the viewer is further detected, and activation of the subpixels is adapted to the change of the head position,
   and the intensity centroids (S) within the image points are shifted upon a change of a viewing distance (A) between the head position and matrix screen (MB) by matching the weighting of the intensities such that a lateral distance (P) between the centroid of the intensity distributions in the left viewing zone (BZL) and the centroid of the intensity distributions in the right viewing zone (BZR) in a viewing plane (BE) varying with the head position remains constant by varying a lateral distance (p) between the intensity centroid (S) within an image point of the first subgroup and the intensity centroid (S) within a nearest image point of the second subgroup.

2. The method according to claim 1, **characterized in that** the intensities of the subpixels of all image points are weighed such that, within the viewing plane (BE) detected with the head position, the centroids of the intensity distributions of the light emanating from the various image points of the first subgroup coincide in the left viewing zone (BZL), and the centroids of the intensity distributions of the light emanating from the various image points of the second subgroup coincide in the right viewing zone (BZR).

3. The method according to any one of claims 1 or 2, **characterized in that** the intensity centroids (S) within the image points are shifted laterally upon a change of the head position by adapting the weighting of the intensities proportional to this change.

4. The method according to any one of claims 1 to 3, **characterized in that**, for tracking the change of the head position, a new assignment of image information to subpixels which, through said change, in each case become visible to another eye of the viewer is additionally carried out.

**5.** The method according to any one of claims 1 to 4, **characterized in that**, for activating the subpixels with the subpixel-dependently weighed intensity within each of the image points, an intensity value resulting from the image information for each image point for each subpixel of the image point is multiplied by a value of a weighting function, the said weighting function being independent from the image information and having a form depending on the head position and a location of the image point and defining a weight (GW) being position-dependent within each row for each subpixel of the image point.

**6.** The method according to any one of claims 1 to 5, **characterized in that** a lateral interpupillary distance of the viewer will be determined in addition to the head position, and the intensities within the image points are weighed such that the lateral distance (P) between the centroid of the intensity distributions in the left viewing zone and the centroid of the intensity distributions in the right viewing zone corresponds to the determined interpupillary distance within the viewing plane.

**7.** The method according to any one of claims 1 to 6, **characterized in that** the change of the viewer's head position is detected without contact with a tracking method.

**8.** A device for the autostereoscopic representation of image information comprising

a matrix screen (MB) with a plurality of subpixels positioned in rows and columns and being variable in their intensity which are integrated into a plurality of subpixel groups for reproducing one image point each;
a barrier raster positioned in parallel to the matrix screen (MB) by means of which light emanating from the image points is guidable into one of two adjacent viewing zones (BZL, BZR), respectively;
means for detecting a viewer's head position; and
a control device for activating the subpixels of the matrix screen (MB),
**characterized in that**
the device is, by programming, configured to perform the method according to any one of claims 1 to 7.

**9.** The device according to claim 8, **characterized in that** the barrier raster includes grid lines, prismatic elements or cylindrical lenses running parallel to a column direction of the matrix screen (MB).

**10.** The device according to any one of claims 8 or 9, **characterized in that** the means for detecting the head position includes at least one video camera for noncontact tracking.

**11.** The device according to any one of claims 8 to 10, **characterized in that** it further includes means for determining an interpupillary distance of the viewer.

**12.** The device according to any one of claims 8 to 11, **characterized in that**, in each row of the matrix screen (MB), image points of a first subgroup alternate with image points of a second subgroup wherein light emanating from the image points of the first subgroup is guided through the barrier raster into a left viewing zone (BZL) for a left eye, and light emanating from the image points of the second subgroup is guided into a right viewing zone (BZR) for a right eye of the viewer.

**13.** The device according to any one of claims 8 to 12, **characterized in that** the barrier raster can be switched over in a synchronized manner with the subpixels of the matrix screen (MB) between two states in order to guide light emanating from the image points alternately into a left viewing zone (BZL) for a left eye, and into a right viewing zone (BZR) for a right eye of the viewer.

**14.** A device according to any one of claims 8 to 13, **characterized in that** each image point includes at least three rows of subpixels and at least three subpixels of different colour in each row.

**Revendications**

**1.** Procédé de représentation autostéréoscopique d'informations d'image sur un écran à matrice (MB), sur lequel une pluralité de pixels est formée par respectivement un groupe de sous-pixels avec une pluralité de sous-pixels d'intensité variable, agencés en lignes et en colonnes, dans lequel

- deux demi-images stéréoscopiques sont formées sur respectivement un de deux sous-groupes des pixels et la lumière partant des deux sous-groupes de pixels est conduite à travers une trame barrière dans deux zones d'observation voisines (BZL, BZR) de sorte que la lumière partant des pixels d'un premier des deux sous-groupes tombe dans une zone d'observation gauche (BZL) pour un oeil gauche et la lumière partant des pixels d'un deuxième des deux sous-groupes tombe dans une zone d'observation droite (BZR) pour un oeil droit d'un observateur,

- dans lequel les sous-pixels sont commandés à l'intérieur de chacun des pixels avec une intensité pondérée en fonction des sous-pixels par ligne en plus des informations d'image de sorte qu'un centre de gravité d'intensité (S) à l'intérieur du pixel respectif et ainsi un centre de gravité d'une répartition d'intensité latérale de la lumière partant de ce pixel est déplaçable latéralement dans la zone d'observation (BZL, BZR) correspondante par une modification de la pondération,

- dans lequel en outre une modification d'une position de la tête de l'observateur est détectée et une commande des sous-pixels est adaptée à la modification de la position de la tête

- et les centres de gravité d'intensité (S) sont décalés à l'intérieur des pixels lors d'une modification d'une distance d'observation (A) entre la position de la tête et l'écran à matrice (MB) par une adaptation de la pondération des intensités de sorte qu'une distance latérale (P) entre le centre de gravité des répartitions d'intensité dans la zone d'observation gauche (BZL) et le centre de gravité des répartitions d'intensité dans la zone d'observation droite (BZR) reste constante dans un plan d'observation (BE) variant avec la position de la tête, par le fait qu'une distance latérale (p) entre le centre de gravité d'intensité (S) à l'intérieur d'un pixel du premier sous-groupe et le centre de gravité d'intensité (S) à l'intérieur du pixel le plus proche du deuxième sous-groupe est modifiée.

2. Procédé selon la revendication 1, **caractérisé en ce que** les intensités des sous-pixels de tous les pixels sont pondérées de sorte qu'à l'intérieur du plan d'observation (BE) détecté avec la position de la tête, les centres de gravité des répartitions d'intensité de la lumière partant des différents pixels du premier sous-groupe dans la zone d'observation gauche (BZL) coïncident les uns aux autres et les centres de gravité des répartitions d'intensité de la lumière partant des différents pixels du deuxième sous-groupe dans la zone d'observation droite (BZR) coïncident les uns aux autres.

3. Procédé selon l'une quelconque des revendications 1 ou 2, **caractérisé en ce que** les centres de gravité d'intensité (S) sont décalés latéralement à l'intérieur des pixels lors d'une modification latérale de la position de la tête par une adaptation de la pondération des intensités proportionnellement à cette modification.

4. Procédé selon l'une quelconque des revendications 1 à 3, **caractérisé en ce que** pour l'actualisation de la modification de la position de la tête, une nouvelle association d'information d'image avec des sous-pixels, qui deviennent visibles par la modification à respectivement un autre oeil de l'observateur, a lieu en plus.

5. Procédé selon l'une quelconque des revendications 1 à 4, **caractérisé en ce qu'**une valeur d'intensité résultant des informations d'image pour un pixel pour chaque sous-pixel du pixel est multipliée avec une valeur d'une fonction de pondération pour la commande des sous-pixels avec l'intensité pondérée en fonction des sous-pixels à l'intérieur de chacun des pixels, dans lequel cette fonction de pondération est indépendante des informations d'image et a une forme dépendant de la position de la tête et d'un lieu du pixel et définit pour chaque sous-pixel du pixel un poids (GW) dépendant du lieu à l'intérieur de chaque ligne.

6. Procédé selon l'une quelconque des revendications 1 à 5, **caractérisé en ce qu'**en plus de la position de la tête, une distance oculaire latérale de l'observateur est déterminée et les intensités à l'intérieur des pixels sont pondérées de sorte que la distance latérale (P) entre le centre de gravité des répartitions d'intensité dans la zone d'observation gauche et le centre de gravité des répartitions d'intensité dans la zone d'observation droite correspond à la distance oculaire déterminée à l'intérieur du plan d'observation.

7. Procédé selon l'une quelconque des revendications 1 à 6, **caractérisé en ce que** la modification de la position de la tête de l'observateur est détectée sans contact avec un procédé de suivi.

8. Dispositif de représentation autostéréoscopique d'informations d'image, comprenant

- un écran à matrice (MB) avec une pluralité de sous-pixels d'intensité variable, agencés en lignes et en colonnes qui sont regroupés en une pluralité de groupes de sous-pixels pour la restitution de respectivement un pixel,
- une trame barrière agencée parallèlement à l'écran à matrice (MB), avec laquelle la lumière partant des pixels peut être conduite dans respectivement une de deux zones d'observation (BZL, BZR) voisines,

- un dispositif de détection d'une position de la tête d'un observateur et
- un dispositif de commande pour la commande des sous-pixels de l'écran à matrice (MB),

**caractérisé en ce que** le dispositif est aménagé du point de vue du programme pour la réalisation d'un procédé selon l'une quelconque des revendications 1 à 7.

9. Dispositif selon la revendication 8, **caractérisé en ce que** la trame barrière comprend des lignes de réseau, des éléments de prisme ou des lentilles cylindriques s'étendant parallèlement à une direction de colonne de l'écran à matrice (MB).

10. Dispositif selon l'une quelconque des revendications 8 ou 9, **caractérisé en ce que** le dispositif de détection de la position de la tête comprend au moins une caméra vidéo pour un suivi sans contact.

11. Dispositif selon l'une quelconque des revendications 8 à 10, **caractérisé en ce qu'**il comprend en outre un dispositif de détermination d'une distance oculaire de l'observateur.

12. Dispositif selon l'une quelconque des revendications 8 à 11, **caractérisé en ce que** dans chaque ligne de l'écran à matrice (MB), des pixels d'un premier sous-groupe s'alternent avec des pixels d'un deuxième sous-groupe, dans lequel la lumière partant des pixels du premier sous-groupe est conduite dans une zone d'observation gauche (BZL) pour un oeil gauche et la lumière partant des pixels du deuxième sous-groupe est conduite dans une zone d'observation droite (BZR) pour un oeil droit de l'observateur.

13. Dispositif selon l'une quelconque des revendications 8 à 12, **caractérisé en ce que** la trame barrière peut être commutée de manière synchronisée avec les sous-pixels de l'écran à matrice (MB) entre deux états pour conduire la lumière partant des pixels en alternance dans une zone d'observation gauche (BZL) pour un oeil gauche et dans une zone d'observation droite (BZR) pour un oeil droit de l'observateur.

14. Dispositif selon l'une quelconque des revendications 8 à 13, **caractérisé en ce que** chaque pixel comprend au moins trois lignes de sous-pixels et dans chaque ligne au moins trois sous-pixels de différente couleur.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- WO 9827451 A1